# EUROPEAN PATENT APPLICATION

(11) **EP 1 507 149 A1**
(43) Date of publication of application: **16.02.2005**
(21) Application number: 04254078.1
(22) Date of filing: 07.07.2004
(51) Int. Cl.: G01S 13/42, H01Q 3/04, H01Q 1/34

(54) **Radar apparatus with antenna rotated at various speeds**

(30) Priority: 14.08.2003 GB 0319111
(71) Applicant: Smiths Group PLC, London NW11 8DS (GB)
(72) Inventor: Scorer, Michael, St. Albans Hertfordshire AL4 0SY (GB); Taylor, Martin Stuart, Chelmsford Essex CM1 4QR (GB)
(74) Representative: Flint, Jonathan McNeill

(57) **Abstract**

Marine vessel radar apparatus has an antenna 1 rotated by a motor 2. The speed at which the antenna 1 is rotated is adjustable between about 20 rpm and 50 rpm. The speed may be adjusted by a manual control 8 or automatically, such as in response to a range setting of the apparatus, the speed of the vessel or target information received by the apparatus.

## Description

This invention relates to radar apparatus of the kind including an antenna and a motor for rotating the antenna.

The invention is more particularly concerned with marine radar apparatus.

Most large ships are required to carry marine navigation radar. International regulations specify that the rotational speed of the antenna must be at least 20 rpm in the case of conventional vessels or 40 rpm in the case of high-speed vessels. Typically, radar antenna rotate at about 24 rpm in conventional vessels and 44 rpm in high-speed vessels.

Higher rotational speeds have an advantage in that the target information is updated more frequently, which is important for collision avoidance in high speed vessels where the scenario around the vessels is rapidly changing. Also, higher rotational speeds are associated with a higher signal-to-noise ratio. Lower rotational speeds, however, also have advantages in some situations because the longer beam dwell time improves the probability of detecting targets. The fixed speed of conventional radar means that the speed may not be ideal for all situations.

JP 62-118274 and JP 2-45783 propose radar with an antenna rotated at a speed that varies during each revolution so that some sectors of azimuth are scanned at low speed and others at high speed.

It is an object of the present invention to provide alternative radar apparatus.

According to the present invention there is provided radar apparatus of the above-specified kind, characterised in that the apparatus is selectively operable to rotate the antenna through multiple revolutions at at least two different speeds.

The apparatus may include a manual control for selecting the speed of rotation of the antenna. The apparatus may be arranged automatically to select the speed of rotation of the antenna. The speed of rotation of the antenna may be selected according to a setting of the radar, such as a range setting. The speed of rotation of the antenna may be selected according to target information received by the radar. The speed of rotation of the antenna may be selected according to the speed of a marine vessel carrying the radar apparatus.

The speed of rotation of the antenna may be adjustable from not less than 20rpm to a higher speed of at least 40 rpm. The speed of rotation of the antenna may continuously variable. Alternatively, the speed of rotation of the antenna may be adjustable between a single low-speed setting and a range of higher-speed settings over which it is continuously variable.

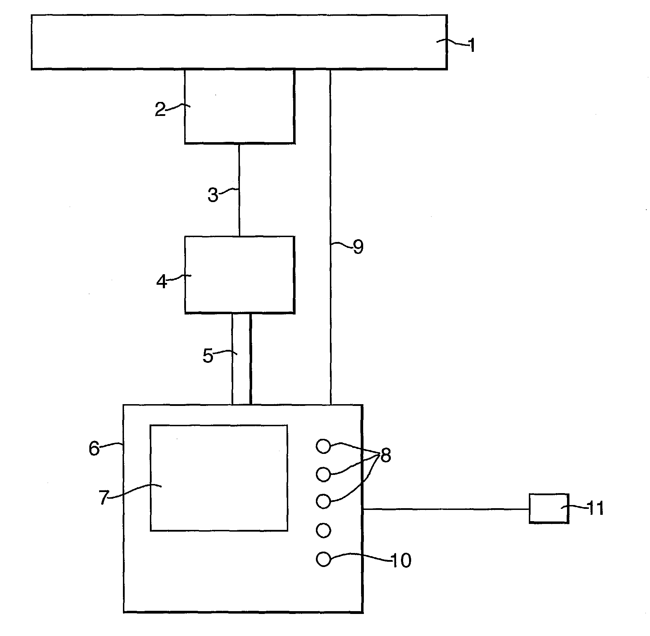

Marine radar apparatus and its method of operation, according to the present invention, will now be described, by way of example, with reference to the accompanying drawing, which shows the apparatus schematically.

The apparatus includes a conventional antenna 1 rotated by a three-phase electric motor and gearbox 2. The motor 2 is driven by alternating electrical signals on line 3 from an inverter 4. The inverter 4 produces an alternating output the frequency of which is dependent on signals supplied to its input via a serial link 5, such as a CANbus. The apparatus also includes a display and control unit 6 including a display screen 7 and various user-operable controls 8. The unit 6 connects with the serial link 5 and is also interconnected with the antenna 1 via a cable 9 by which radar signals are supplied to and from the antenna.

The speed of rotation of the antenna 1 is variable according to the frequency of the output of the inverter 4, which is, in turn, selected by the unit 6.

There are various ways in which the unit 6 could control antenna speed. It could be controlled manually by direct intervention of the user of the radar apparatus. In such an arrangement the unit 6 has a control 10 that the user alters to vary the speed. Typically, in a conventional vessel the speed could be variable between about 24 rpm and 50 rpm. It may not be continuously variable throughout this range. For example, it might have a single setting of 24 rpm for long-range operation and a variable speed between 40 rpm and 50 rpm for short-range operation. The user might select an appropriate speed according to the range at which the radar is being operated or according to the perceived target situation, increasing the speed when there are a large number of targets nearby so that the radar image on the screen is updated more frequently. When the vessel is in open water and the radar is at its maximum range setting the user might prefer to have a lower antenna speed so that the increased beam dwell time increases the probability of detection of targets.

Alternatively, the speed could be controlled automatically by the unit 6. For example, when the range of the radar is altered, the unit 6 could alter the speed of rotation accordingly. Many modem radar have provision for identifying targets within specified ranges and this information could be used, for example, to increase rotational speed when there was a high target density. The radar antenna speed could be altered in response to external inputs, such as from a sensor 11 responsive to the speed of the vessel, where the antenna speed would be increased with increasing speed of the vessel.

It will be appreciated that the speed of the radar could be controlled according to a combination of different factors. For example, the rotation speed of the antenna could be increased both when vessel speed increases and when target information received by the radar indicates increased hazard.

It can be seen that the present invention provides for the antenna to be rotated at a constant speed through multiple revolutions and subsequently to be rotated at a different constant speed through multiple revolutions according to the antenna speed setting. In this way, the speed of rotation can be selected to that best suited to the circumstances in which the radar is being used and can be readily changed as circumstances change.

Instead of the speed of the antenna being continuously variable it could be selectable between several discrete different speeds, preferably at least three speeds.

## Claims

1. Radar apparatus including an antenna (1) and a motor (2) for rotating the antenna, **characterised in that** the apparatus is selectively operable to rotate the antenna (1) through multiple revolutions at at least two different speeds.

2. Radar apparatus according to Claim 1, **characterised in that** the apparatus has a manual control (10) for selecting the speed of rotation of the antenna (1).

3. Radar apparatus according to Claim 1 or 2, **characterised in that** the apparatus is arranged automatically to select the speed of rotation of the antenna (1).

4. Radar apparatus according to Claim 3, **characterised in that** the speed of rotation of the antenna (1) is selected according to a setting of the radar (6).

5. Radar apparatus according to Claim 4, **characterised in that** the setting of the radar is a range setting.

6. Radar apparatus according to Claim 3, **characterised in that** the speed of rotation of the antenna (1) is selected according to target information received by the radar.

7. Radar apparatus according to any one of the preceding claims, **characterised in that** the speed of rotation of the antenna (1) is selected according to the speed of a marine vessel carrying the radar apparatus.

8. Radar apparatus according to any one of the preceding claims, **characterised in that** the speed of rotation of the antenna (1) is adjustable from not less than 20 rpm to at least 40 rpm.

9. Radar apparatus according to any one of the preceding claims, **characterised in that** the speed of rotation of the antenna (1) is continuously variable.

10. Radar apparatus according to any one of Claims 1 to 8, **characterised in that** the speed of rotation of the antenna (1) is adjustable between a single low-speed setting and a range of higher-speed settings over which it is continuously variable.
